(19) Europäisches Patentamt
European Patent Office
Office européen des brevets

(11) **EP 2 808 120 A2**

(12) **EUROPEAN PATENT APPLICATION**

(43) Date of publication:
03.12.2014 Bulletin 2014/49

(51) Int Cl.:
*B23K 26/38* (2014.01)  *B23K 26/40* (2014.01)
*B23K 26/08* (2014.01)

(21) Application number: 14166831.9

(22) Date of filing: 02.05.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.05.2013 JP 2013112765

(71) Applicant: Mitsuboshi Diamond Industrial Co., Ltd.
Settsu
Osaka 566-0034 (JP)

(72) Inventor: Fukuhara, Kenji
Settsu, Osaka 566-0034 (JP)

(74) Representative: TBK
Bavariaring 4-6
80336 München (DE)

(54) **Substrate cutting device using laser beam**

(57)    It is intended to enable a substrate made of a thick plate material with a high laser beam absorption rate to be easily processed by means of boring or so forth in a short time. The present device includes a work table (2) on which a substrate is disposed, a laser beam output section (15), a rotation unit, a beam focusing unit and a scan unit. The laser beam output section (15) is configured to output a laser beam, having a wavelength with an absorption rate of 50% or greater, onto the substrate. The rotation unit is configured to rotate the laser beam emitted from the laser beam output section (15) with a predetermined rotation radius. The beam focusing unit is configured to focus the laser beam from the rotating unit onto a depth position included within the substrate, the depth position is located closer to one substrate surface disposed on a laser beam irradiation side than to the other substrate surface. The scan unit is configured to scan the focused and rotated laser beam along a processing line, and is also configured to repeatedly execute the scanning so as to process the substrate.

CIRCLE WITH φ 0.4 ~ 0.8 mm
(HIGH SPEED ROTATION: ~15000 rpm)

CIRCLE WITH
φ 4.2 ~ 4.6 mm
(400~800rpm)

5.0mm

PROCESSING REGION

FIG. 7

EP 2 808 120 A2

**Description**

BACKGROUND OF THE INVENTION

Field of the Invention

The present invention relates to a substrate cutting device, particularly to a substrate cutting device using a laser beam, which is configured to irradiate the laser beam onto a substrate so as to cut the substrate.

Background Art

A device described in Japan Laid-open Patent Application Publication No. JP-A-2007-118054, for instance, has been well-known as a substrate processing device using a laser beam. This type of processing device is configured to irradiate a green laser beam with a wavelength of roughly 532 nm onto a workpiece such as a substrate. In general, the green laser beam penetrates a substrate. However, the laser beam is supposed to be absorbed by the substrate under a condition where the laser beam is focused and the intensity thereof exceeds a predetermined threshold. Under the condition, plasma is generated in a part of the substrate on which the laser beam is focused. The substrate is thereby evaporated. With use of the aforementioned principle, various types of processing (e.g., boring) can be executed for the substrate.

It is herein preferable to process the substrate by moving the focal position of a laser beam from one substrate surface (i.e., bottom surface) disposed oppositely to a laser beam irradiation side to the other substrate surface (i.e., top surface) disposed on the laser beam irradiation side. This is because, when the substrate is gradually processed from below to above, powdered material particles downwardly drop and can be prevented from exerting an adverse effect on a processing target portion.

However, when processing (e.g., boring) is executed for a substrate with a relatively large thickness and a high laser beam absorption rate, a laser beam does not penetrate through the bottom surface of the substrate. Therefore, it is quite difficult to execute processing of the substrate with a well-known processing method as described above.

Therefore, when processing (e.g., boring) is executed for, especially, a substrate with a large thickness and a high laser beam absorption rate, it is required to employ a processing method that is different from a well-known processing method.

It is an object of the present invention to easily execute processing such as boring for a substrate made of a thick plate material with a high laser beam absorption rate in a short time.

SUMMARY OF THE INVENTION

A substrate cutting device using a laser beam according to a first aspect of the present invention is a device configured to irradiate the laser beam onto a substrate so as to cut the substrate, and includes a work table, a laser beam output section, a rotation unit, a beam focusing unit and a scan unit. The work table is a member on which the substrate to be processed is disposed. The laser beam output section is configured to output the laser beam, having a wavelength with an absorption rate of 50% or greater, onto the substrate. The rotation unit is configured to rotate the laser beam emitted from the laser beam output section with a predetermined rotation radius. The beam focusing unit is configured to focus the laser beam from the rotating unit onto a depth position included within the substrate, the depth position is located closer to one substrate surface disposed on a laser beam irradiation side than to the other substrate surface. The scan unit is configured to scan the focused and rotated laser beam along a processing line, and is also configured to repeatedly execute the scanning so as to process the substrate.

In the present substrate cutting device, the laser beam outputted from the laser beam output section is rotated by the rotation unit, and is focused onto a depth position that is included within the substrate and is located closer to one substrate surface disposed on the laser beam irradiation side (e.g., onto the front surface disposed on the laser beam irradiation side). Further, the focused laser beam is scanned along the processing line while being rotated. Thus, the substrate is processed.

The laser beam herein has a wavelength with an absorption rate of 50% or greater with respect to the substrate. When described from the opposite perspective, the substrate to be processed absorbs a laser beam having a predetermined wavelength at an absorption rate of 50% or greater. Therefore, the laser beam is unlikely to reach the other substrate surface disposed on the opposite side of the laser beam irradiation side. Especially, in a substrate with a large thickness, the laser beam does not reach the substrate surface disposed on the opposite side of the laser beam irradiation side. Therefore, such a substrate cannot be processed.

In view of the above, according to the present invention, the substrate is processed by focusing the laser beam onto a position that is included within the substrate and located on the laser beam irradiation side, and further, by rotating and simultaneously scanning the laser beam. Through the rotation of the focused laser beam, the laser beam is supposed to be irradiated onto the same position at a plurality of times. Thus, processing efficiency is increased, and the substrate can be processed in a short processing time.

A substrate cutting device using a laser beam according to a second aspect of the present invention relates to the substrate cutting device of the first aspect, and wherein the substrate has a thickness of 1 mm or greater.

Now, as described above, when a substrate has a high absorption rate, the laser beam is unlikely to penetrate the inside of the substrate and has difficulty in processing the substrate. Further, this tendency becomes remarkable in processing a substrate with a large thickness. However, when the present invention is applied to processing of a substrate with a thickness of 1 mm or greater, the substrate can be easily processed.

A substrate cutting device using a laser beam according to a third aspect of the present invention relates to the substrate cutting device of the first or second aspect, and wherein the beam focusing unit is configured to move a focal position of the laser beam from the laser beam irradiation side to an opposite side thereof within the substrate.

Here, the substrate is processed while the focal position of the laser beam is moved from the laser beam irradiation side to the opposite side thereof. Processing efficiency can be thereby further enhanced, and processing time can be further reduced.

A substrate cutting device using a laser beam according to a fourth aspect of the present invention relates to the substrate cutting device of any of the first to third aspects, and wherein the substrate is made of any one selected from the group consisting of carbon, ceramic and silicon.

When the present invention is applied to the processing of the substrate made of any one of the aforementioned materials, such substrate can be easily processed.


Advantageous Effects of Invention

According to the present invention as described above, processing such as boring can be easily executed for a substrate made of a thick plate material with a high laser beam absorption rate in a short time.


BRIEF DESCRIPTION OF THE DRAWINGS

Referring now to the attached drawings which form a part of this original disclosure:

FIG 1 is an external perspective view of a substrate cutting device according to an exemplary embodiment of the present invention;
FIG 2 is an enlarged perspective view of a work table;
FIG 3 is an enlarged perspective view of a structure of a laser irradiation head;
FIG 4 is a diagram schematically illustrating an arrangement of a first hollow motor and first wedge prisms;
FIG 5 is a diagram illustrating a relation between an apex angle and an angle of deviation in a prism;
FIG 6 is a diagram schematically illustrating an arrangement of a second hollow motor, a second wedge prism and a collective lens;
FIG 7 is a diagram illustrating a trajectory of a laser beam;
FIG 8A and 8B include schematic diagrams for explaining an action of controlling a focal spot in a Z-coordinate axis direction;
FIG 9A and 9B include images showing an exemplary processing performed in the exemplary embodiment of the present invention and those showing an exemplary processing performed in a comparative example; and
FIG 10A and 10B include a schematic diagram for explaining a focal spot rotation method and that for explaining a concentric circle method.


DETAILED DESCRIPTION OF THE EMBODIMENTS


(Entire Structure)

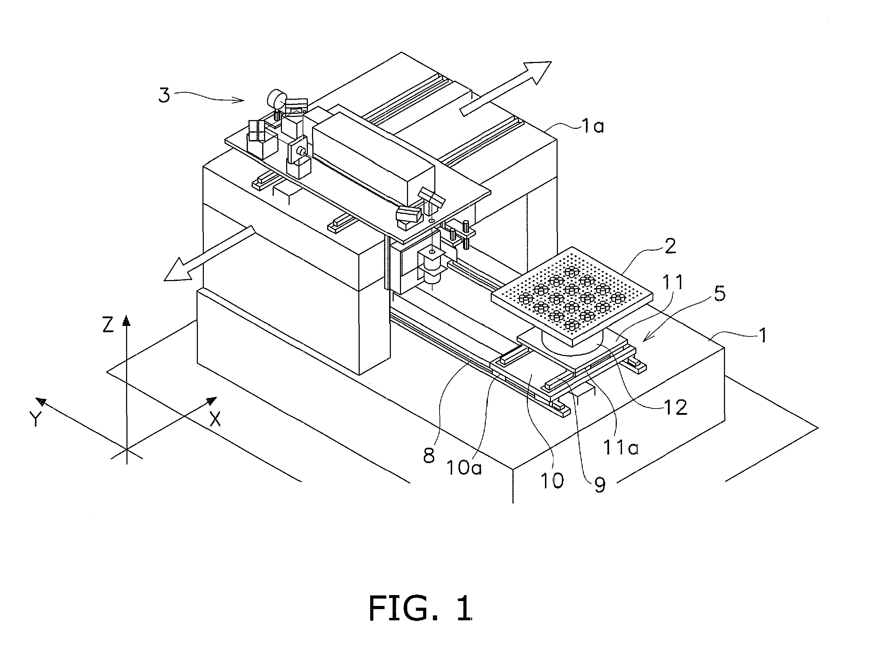

FIG. 1 illustrates the entire structure of a substrate cutting device according to an exemplary embodiment of the present invention. The substrate cutting device is a device configured to irradiate a laser beam onto a substrate made of carbon, ceramic, silicon or so forth along a processing line in order to execute various processing (e.g., boring) for the substrate. The substrate cutting device includes a bed 1, a work table 2 on which a substrate is disposed, and a laser beam irradiation head 3 for irradiating a laser beam onto the substrate. As illustrated in FIG 1, on a plane arranged along the top surface of the bed 1, axes arranged perpendicularly to each other are herein defined as an X-coordinate axis and a Y-coordinate axis, and further, a vertical axis arranged perpendicularly to the axes is defined as a Z-coordinate axis. Moreover, two opposite directions (i.e., a positive (+) direction and a negative (-) direction) arranged along the X-coordinate axis are collectively defined as an X-coordinate axis direction; similarly, two opposite directions arranged along the Y-coordinate axis are collectively defined as a Y-coordinate axis direction; yet similarly, two opposite directions arranged along the Z-coordinate axis are collectively defined as a Z-coordinate axis direction.

(Work Table 2 and Moving Mechanism Thereof)

<Work Table 2>

The work table 2 is formed in a rectangular shape. A table moving mechanism 5 is disposed below the work table 2, and is configured to move the work table 2 in both of the X-coordinate axis direction and the Y-coordinate axis direction.

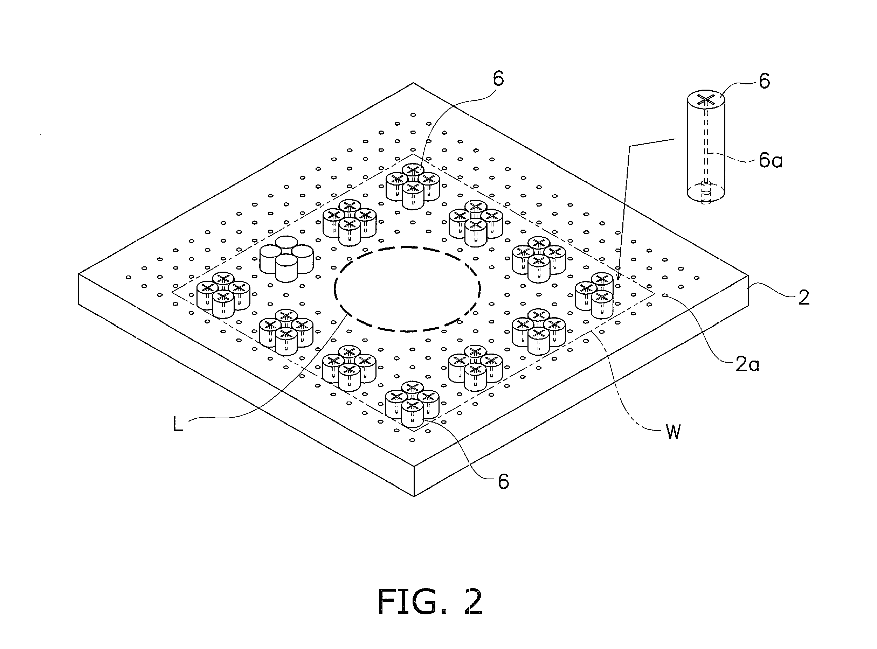

As illustrated in an enlarged view of FIG 2, the work table 2 includes a plurality of blocks 6. The plural blocks 6 are members for supporting a substrate W (depicted with a dashed two-dotted line in the drawing) such that the substrate W is lifted up from the surface of the work table 2. The blocks 6 are allowed to be attached to arbitrary positions on the work table 2 unless the blocks 6 overlap with a processing line L (depicted with a dashed line) of the substrate W. Further, the work table 2 has a plurality of air inlet holes 2a bored in a grid arrangement, whereas each block 6 has an air inlet aperture 6a penetrating therethrough in the up-and-down direction. Also, the air inlet apertures 6a of the blocks 6 are herein connected to the air inlet holes 2a of the work table 2. The substrate W can be fitted to the blocks 6 when air is sucked through the air inlet apertures 6a and the air inlet holes 2a. It should be noted that the air inlet mechanism is formed by components such as a well-known exhaust pump. Therefore, detailed explanation thereof will not be hereinafter made.

<Table Moving Mechanism 5>

As illustrated in FIG. 1, the table moving mechanism 5 includes a pair of first guide rails 8, a pair of second guide rails 9, a first moving table 10 and a second moving table 11. The pair of first guide rails 8 is mounted to the top surface of the bed 1 so as to extend in the Y-coordinate axis direction. The first moving table 10 is disposed on the top sides of the first guide rails 8. The first moving table 10 has a plurality of guide parts 10a on the bottom surface thereof. The guide parts 10a are movably engaged with the first guide rails 8. The second guide rails 9 are mounted to the top surface of the first moving table 10 so as to extend in the X-coordinate axis direction. The second moving table 11 is disposed on the top sides of the second guide rails 9. The second moving table 11 has a plurality of guide parts 11a on the bottom surface thereof. The guide parts 11a are movably engaged with the second guide rails 9. The work table 2 is attached to the top side of the second moving table 11 through a fixation member 12.

The aforementioned table moving mechanism 5 enables the work table 2 to move in both of the X-coordinate axis direction and the Y-coordinate axis direction. It should be noted that the first and second moving tables 10 and 11 are configured to be driven by a driving unit (e.g., a well-known motor), although detailed explanation thereof will not be herein made.

(Laser Beam Irradiation Head 3)

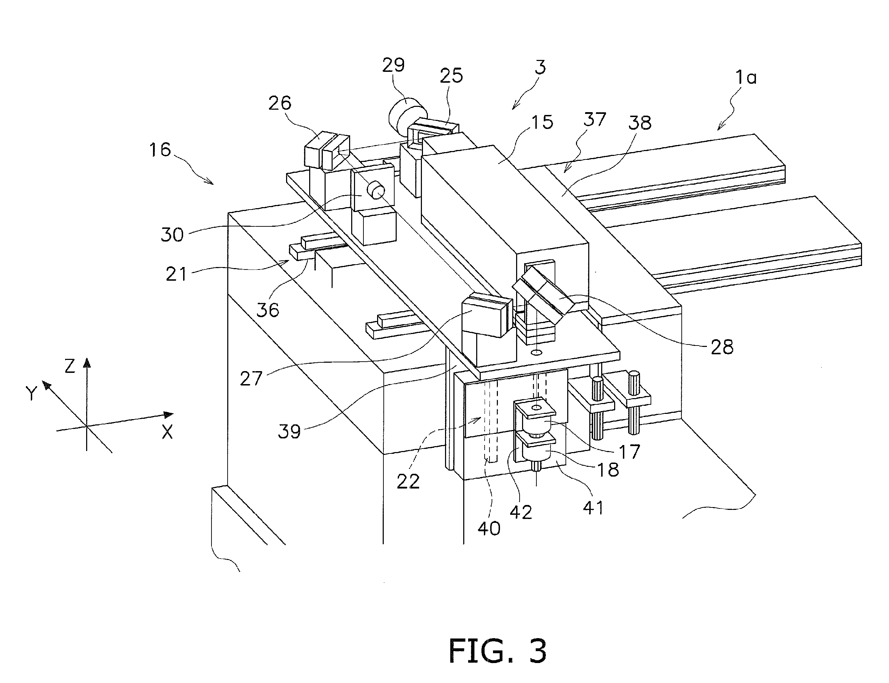

As illustrated in FIGS. 1 and 3, the laser beam irradiation head 3 is attached to a portal frame 1a disposed on the top surface of the bed 1. The laser beam irradiation head 3 includes: a laser beam output section 15; an optical system 16; a first hollow motor 17 that a pair of first wedge prisms (to be described) is built in the inside thereof; and a second hollow motor 18 that a pair of second wedge prisms (to be described) and a collective lens are built in the inside thereof. Further, an X-coordinate axis directional moving mechanism 21 and a Z-coordinate axis directional moving mechanism 22 are mounted to the portal frame 1a. The X-coordinate axis directional moving mechanism 21 is configured to move the laser beam irradiation head 3 in the X-coordinate axis direction. On the other hand, the Z-coordinate axis directional moving mechanism 22 is configured to move the first hollow motor 17 and the second hollow motor 18 in the Z-coordinate axis direction.

<Laser Beam Output Section 15>

The laser beam output section 15 is composed of a laser tube similar to a well-known one. The laser beam output section 15 is configured to irradiate a green laser beam with a wavelength of 532 nm to the opposite side of the work table 2 along the Y-coordinate axis.

<Optical System 16>

The optical system 16 is configured to direct the laser beam irradiated from the laser beam output section 15 to the pair of first wedge prisms built in the first hollow motor 17. As illustrated in an enlarged view of FIG. 3, the optical system 16 includes first to fourth mirrors 25 to 28, a power monitor 29 configured to measure a laser power, and a beam expander 30.

The first mirror 25 is disposed in the vicinity of the output side of the laser beam output section 15. The first mirror 25 is configured to reflect the Y-coordinate-axis directionally irradiated laser beam in the X-coordinate axis direction. The second mirror 26 is disposed in alignment with the first mirror 25 in the X-coordinate axis direction. The second mirror 26 is configured to reflect the X-coordinate-axis directionally transmitting laser beam in the Y-coordinate axis direction so as to direct the reflected laser beam toward the work table 2. The third and fourth mirrors 27 and 28 are disposed above the first hollow motor 17, while being aligned in the X-coordinate axis direction. The third mirror 27 is configured to direct the laser beam reflected thereto by the second mirror 26 toward the fourth mirror 28. The fourth mirror 28 is configured to downwardly direct the laser beam reflected thereto by the third mirror 27 toward the first hollow motor 17.

The beam expander 30 is disposed between the second mirror 26 and the third mirror 27. The beam expander 30 is provided for expanding the laser beam reflected thereto by the second mirror 26 to a parallel beam flux with a constant magnification. With the beam expander 30, the laser beam can be focused on a smaller spot.

<First Wedge Prisms and First Hollow Motor>

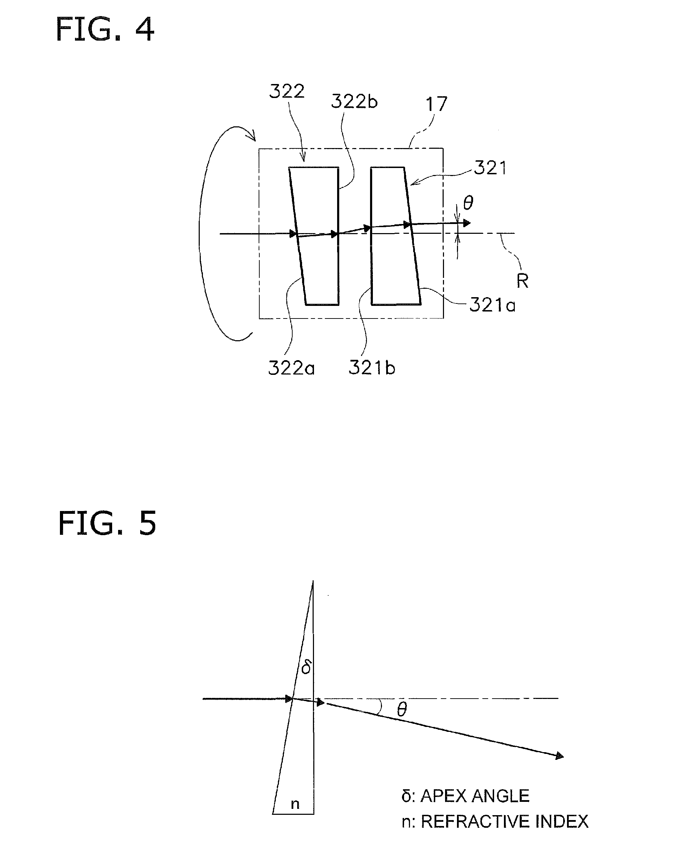

FIG. 4 schematically illustrates the first hollow motor 17 that the first wedge prisms 321 and 322 are disposed in the inside thereof. The first hollow motor 17 has a rotational axis R in the center thereof. The rotational axis R herein extends in the Z-coordinate axis direction. The center part of the first hollow motor 17, including the rotational axis R, is structured to be hollow. Further, the pair of first wedge prisms 321 and 322 is fixed to the hollow part. The shapes and the specific gravities of the first wedge prisms 321 and 322 are the same, but the refractive indices thereof are only different from each other. Each first wedge prism 321, 322 has a slant surface 321a, 322a and a vertical surface 321b, 322b. The slant surface 321a, 322a slants with respect to the rotational axis R, whereas the vertical surface 321b, 322b is vertical to the rotational axis R. Further, the pair of first wedge prisms 321 and 322 is disposed such that the vertical surfaces 321b and 322b thereof are opposed adjacently to and in parallel to each other while the slant surfaces 321a and 322a thereof are in parallel to each other.

With the aforementioned arrangement of the two first wedge prisms 321 and 322 having the same shape and the same specific gravity, the center of gravity of the entire two first wedge prisms 321 and 322 is configured to be positioned on the rotational axis R. Therefore, the amount of dynamic imbalance can be reduced to a great extent even when the first wedge prisms 321 and 322 are rotated at a high speed.

<Angle of Deviation with Use of Two Wedge Prisms >

With reference to FIG. 5, where the apex angle of a prism is set as $\delta$ and the refractive index of the prism is set as n, the angle of deviation ($\theta$) of the prism is expressed as follows when the value of $\delta$ is small.

$$(n-1)\cdot\delta$$

It should be noted that the expression (n - 1)· $\delta$ is an approximate expression where $\delta$ is small enough to conduct an approximation of "sin $\delta$=$\delta$" (note the angle unit is radian). The prisms to be used in the present exemplary embodiment have the apex angle $\delta$ of no more than roughly 5 degrees. Therefore, it is permissible to conduct the approximation of "sin $\delta$ = $\delta$". Therefore, where two wedge prisms have the same shape (i.e., the same apex angle) and respectively have refractive indices n1 and n2, the angles of deviation of the wedge prisms are expressed as follows.

$$\theta 1 \ = \ (n1 \ - \ 1)\cdot\delta$$

$$\theta 2 \ = \ (n2 \ - \ 1)\cdot\delta$$

Further, where a combination of two wedge prisms is selected and disposed such that the slant surfaces of the wedge prisms are in parallel to each other, the angle of deviation $\theta$ of the entire wedge prisms is expressed as follows.

$$\theta = (n1 - 1)\cdot\delta - (n2 - 1)\cdot\delta = (n1 - n2)\cdot\delta$$

As is obvious from the above, where the wedge prisms, made of the same material and having the same apex angle $\delta$, are selected as a combination, n1 is equal to n2 (i.e., n1 = n2) and the total angle of deviation is "0".

However, where n1 is not equal to n2 (i.e., n1 ≠ n2), the total angle of deviation is not "0" and is proportional to a difference between the refractive indices of the two wedge prisms.

In view of the above, the laser beam is herein configured to be deflected when passing through the first wedge prisms 321 and 322 by setting the refractive indices of the two first wedge prisms 321 and 322 to be different from each other. In other words, a laser beam deflection unit with a good rotational balance can be structured with the first wedge prisms 321 and 322 as described above.

It should be noted that the following can be assumed, for instance, as exemplary combinations of wedge prisms having the same specific gravity and different refractive indices.

<Example 1> Combination of "S-BSM22" and "S-TIH11" (having a specific gravity of 3.24 and manufactured by OHARA INC.)

In the combination of wedge prisms, the angle of deviation (°) is "0.169" with respect to an apex angle of 1°.

<Example 2> Combination of "N-SSK2" and "N-SF57" (having a specific gravity of 3.53 and manufactured by SHOTT Nippon K.K.)

In the combination of wedge prisms, the angle of deviation (°) is "0.232" with respect to an apex angle of 1°.

<Example 3> Combination of "BACD11" and "E-FD10" (having a specific gravity of 3.07 and manufactured by HOYA CORPORATION)

In the combination of wedge prisms, the angle of deviation (°) is "0.170" with respect to an apex angle of 1°.

It should be noted that the shape (apex angle) of the both first wedge prisms 321 and 322 is set such that the rotation radius (r) of the laser beam (= f·tan θ or f·θ) can be a desired value. The rotation radius r is herein determined based on the angle of deviation θ and the focal length (f) of the collective lens to be described.

<Second Wedge Prisms, Second Hollow Motor and Collective Lens>

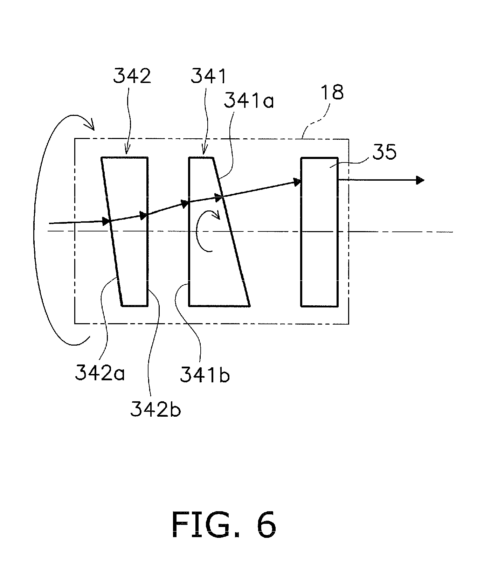

FIG. 6 schematically illustrates the second hollow motor 18 that a pair of second wedge prisms 341 and 342 is disposed in the inside thereof. The second hollow motor 18 has a rotational axis in the center thereof. The rotational axis extends in the Z-coordinate axis direction. This rotational axis is the same as the rotational axis R, and thus, the second hollow motor 18 is coaxial to the first hollow motor 17. The second hollow motor 18 has a hollow part in the center part thereof including the rotational axis R. The pair of second wedge prisms 341 and 342 is attached to the hollow part. Further, the second wedge prisms 341 and 342 are attached such that one wedge prism 341 is rotatable about the rotational axis R relatively to the other wedge prism 342. In other words, the angle of deviation of the pair of second wedge prisms 341 and 342 is adjustable.

The pair of second wedge prisms 341 and 342 has the same shape and the same material (i.e., the same specific gravity), and further, has the same refractive index. Moreover, each second wedge prism 341, 342 has a slant surface 341a, 342a and a vertical surface 341b, 342b. The slant surface 341a, 342a slants with respect to the rotational axis, whereas the vertical surface 341b, 342b is vertical to the rotational axis. Further, the second wedge prisms 341 and 342 are disposed while the second wedge prism 342 is rotated from the state that the angle of deviation is "0" (i.e., the slant surfaces of the both second wedge prisms 341 and 342 are in parallel to each other). Therefore, the slant surfaces 341a and 342a of the two second wedge prisms 341 and 342 are not in parallel to each other. With such combination of two wedge prisms as the second wedge prisms 341 and 342, the pair of second wedge prisms 341 and 342 has a predetermined angle of deviation. The angle of deviation is greater than that of the pair of first wedge prisms 321 and 322.

It should be noted that one of the second wedge prisms 341 and 342 is rotated with respect to the other, and therefore, the rotational balance of the pair of second wedge prisms 341 and 342 is not better than that of the pair of first wedge prisms 321 and 322. However, the second wedge prisms 341 and 342 serve as a unit for scanning the laser beam. Therefore, the rotation speed thereof is set to be low. Thus, in processing the substrate, dynamic imbalance does not exert an adverse effect on the processing quality.

Further, inside the second hollow motor 18, a collective lens 35 is fixed to the output side of the pair of second wedge prisms 341 and 342. It should be noted that as a stand-alone element, the collective lens 35 may be disposed separately from the second hollow motor 18.

<Support and Transport System for Laser Irradiation Head>

As described above, the aforementioned laser beam irradiation head 3 is supported by the portal frame 1a of the bed 1. When described in more detail, as illustrated in FIG 3, a pair of third guide rails 36 is mounted to the top surface of the portal frame 1a, while extending in the X-coordinate axis direction. The pair of third guide rails 36 and a drive mechanism (not illustrated in the drawings) compose the X-coordinate axis directional moving mechanism 21. Further, a support member 37 is supported by the pair of third guide rails 36, while being movable in the X-coordinate axis direction. The support member 37 includes a transverse support member 38 and a vertical support member 39. The transverse support member 38 is supported by the third guide rails 36, whereas the vertical support member 39 downwardly extends from one end (i.e., the work-table-2 side end) of the transverse support member 38. A pair of fourth guide rails 40 is mounted to a lateral surface of the vertical support member 39, while extending in the Z-coordinate axis direction. The pair of fourth guide rails 40 and a drive mechanism (not illustrated in the drawings) compose the Z-coordinate axis directional moving mechanism 22. A third moving table 41 is supported by the fourth guide rails 40, while being movable in the Z-coordinate axis direction.

Further, the transverse support member 38 supports the laser beam output section 15, the first to fourth mirrors 25 to 28, the power monitor 29 and the beam expander 30. On the other hand, a motor support member 42 is fixed to the third moving table 41, while supporting the first and second hollow motors 17 and 18.

(Operation)

Next, explanation will be made for an operation of processing a substrate using a laser beam.

First, the plural blocks 6 are installed on the surface of the work table 2. As illustrated in FIG 2, the plural blocks 6 are herein disposed without overlapping with the processing line L of the substrate W. The substrate W to be processed is then put on the plural blocks 6 set as described above.

Next, the X-coordinate axis directional moving mechanism 21 moves the laser beam irradiation head 3 to an appropriate position in the X-coordinate axis direction, whereas the table moving mechanism 5 moves the work table 2 to an appropriate position in the Y-coordinate axis direction. Accordingly, the focal spot of a laser beam to be irradiated by the laser beam irradiation head 3 is appropriately located in a starting position of the processing line L.

Thus, the laser beam irradiation head 3 and the substrate W are moved to their respective positions for processing. Then, a laser beam is irradiated onto the substrate W for processing the substrate W. The laser beam is herein irradiated by the laser beam output section 15. The irradiated laser beam is reflected by the first mirror 25, and is accordingly directed to the second mirror 26. It should be noted that the power monitor 29 measures the laser power of the laser beam incident upon the first mirror 25. The laser beam incident upon the second mirror 26 is reflected in the Y-coordinate axis direction, and is directed to the third mirror 27 while being expanded into a laser beam flux by the beam expander 30. Then, the laser beam incident upon the third mirror 27 is reflected toward the fourth mirror 28. Further, the laser beam incident upon the fourth mirror 28 is downwardly reflected and inputted into the pair of first wedge prisms 321 and 322 disposed in the center part of the first hollow motor 17.

The laser beam inputted into the pair of first wedge prisms 321 and 322 is deflected and outputted because the refractive indices thereof are different from each other. Further, the first wedge prisms 321 and 322 are rotated at a high speed of, for instance, 15000 rpm or greater. Therefore, the laser beam, penetrating the first wedge prisms 321 and 322, is being rotated at a high speed with a small rotation radius (e.g., a diameter of 0.4 mm to 0.8 mm).

The laser beam, emitted from the first wedge prisms 321 and 322, is inputted into the second wedge prisms 341 and 342. One of the second wedge prisms 341 and 342 is rotated with respect to the other thereof. Further, the second wedge prisms 341 and 342 have an angle of deviation greater than that of the first wedge prisms 321 and 322. Therefore, the laser beam, rotated at a high speed, is circulated and scanned with a relatively large circulation radius (e.g., an outer diameter of 5.0 mm) by rotating the second wedge prisms 341 and 342. It should be noted that the second wedge prisms 341 and 342 are rotated at a low rotation speed of, for instance, roughly 400 rpm to 800 rpm.

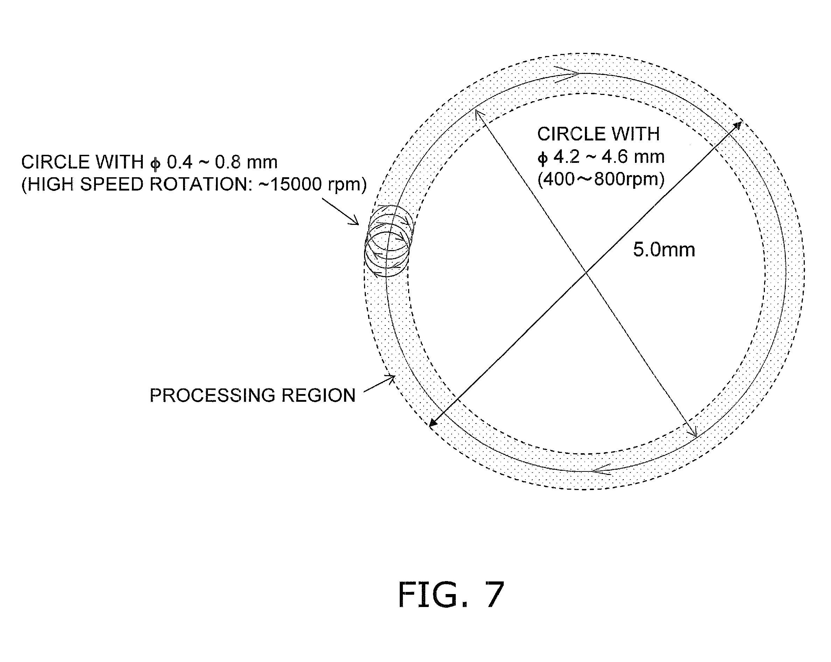

FIG 7 illustrates a trajectory of the aforementioned laser beam on the substrate. A processing error, an attachment error and so forth of the first wedge prisms 321 and 322 herein cause an error in the diameter of a circle to be drawn by the laser beam deflected and rotated by the pair of first wedge prisms 321 and 322. Further, the error in the circle diameter causes an error in the diameter of a hole to be finally processed. As a countermeasure for such error, it is only required to adjust the angle of deviation by rotating one of the second wedge prisms 341 and 342 with respect to the other thereof. The scanning trajectory of the laser beam passing through the second wedge prisms 341 and 342 is accordingly adjusted. As a result, a hole with a desired diameter can be processed with high accuracy.

Where a substrate, having a plate thickness of 1 mm or greater and made of carbon, ceramic or silicon, is herein processed by irradiating a laser beam with a wavelength of 532 nm, the absorption rate of the laser beam with respect to the substrate will be greater than or equal to 50%. Therefore, when being irradiated from the front surface side of substrate, the laser beam does not reach the rear surface of the substrate and thus cannot bore the substrate. Therefore, in performing boring for a substrate, it is generally difficult to bore a hole in the substrate, i.e., to cut and drop a portion enclosed inside the processing line, even by scanning only once the focal spot of the laser beam along the processing line.

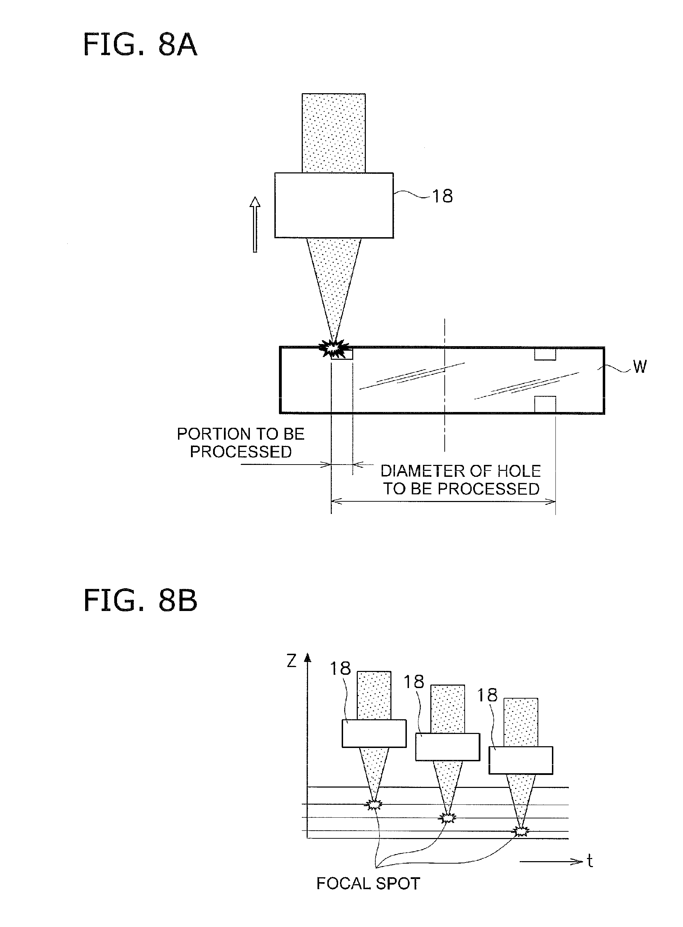

In view of the above, the Z-coordinate axis directional position of the second hollow motor 18 including the collective lens 35 is firstly controlled by the Z-coordinate axis directional moving mechanism 22 such that the beam focal spot (i.e., a processing target portion) is formed on the front surface of the substrate, in other words, on the laser beam irradiated side (see FIG 8A). Under the condition, the beam focal spot is circulated several times along the processing line. Then, the beam focal spot is lowered by controlling the Z-coordinate axis directional position of the second hollow motor 18 as illustrated in FIG 8B. Similarly, the focal spot is again circulated several times along the processing line. Then, the beam focal spot is further lowered. With repetition of the aforementioned operation, a hole can be bored in the substrate by cutting and dropping the portion enclosed inside the processing line.

Alternatively, instead of lowering the focal spot every time the focal spot is circulated several times along the processing line, the substrate can be similarly bored by consecutively lowering the focal spot at an appropriate speed in the Z-coordinate axis direction and by thus helically processing the substrate.

(Experimental Examples)

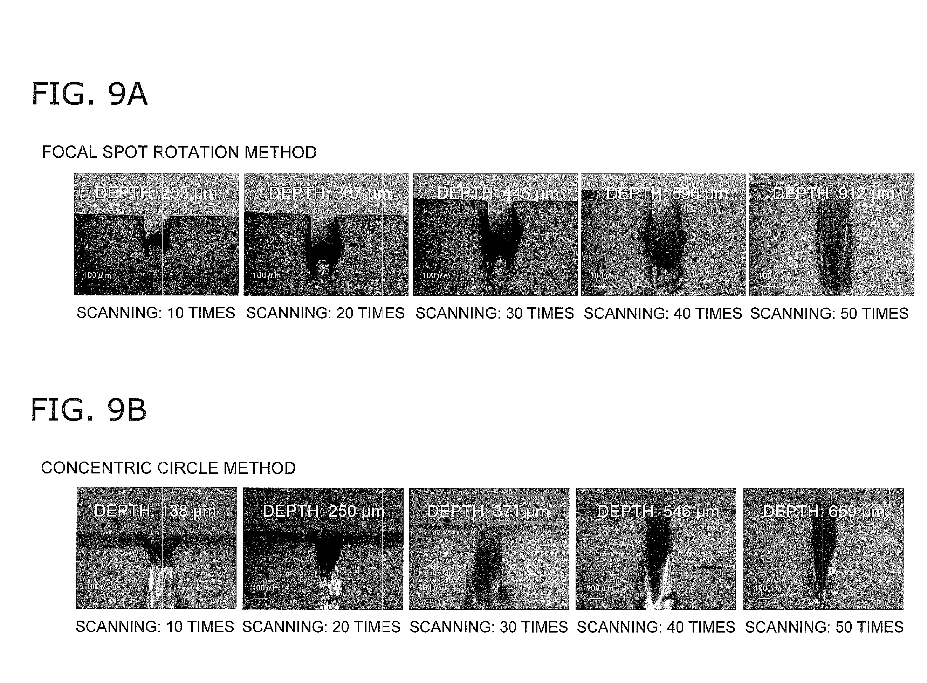

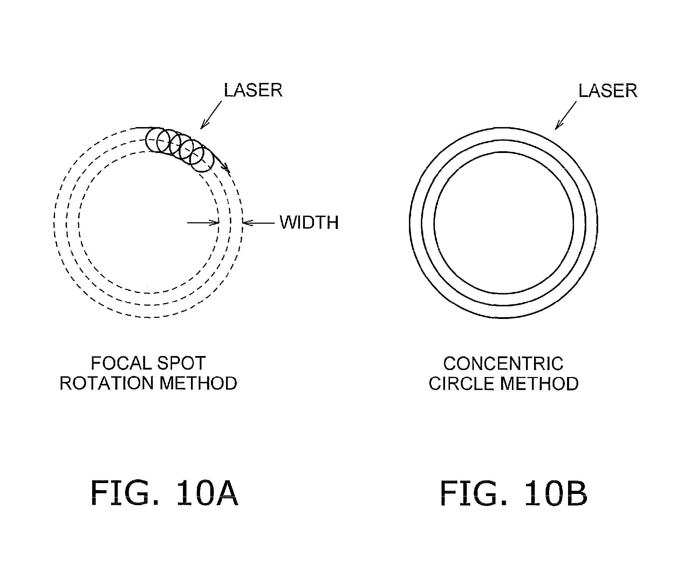

FIG 9 shows an experimental example of processing a substrate by means of laser beam irradiation with a focal spot rotation method and another experimental example of processing a substrate by means of laser beam irradiation with a concentric circle method. FIG 9A relates to the processing with the focal spot rotation method. As illustrated in FIG 10A, the focal spot rotation method is a laser beam irradiation method employed in the present invention. On the other hand, FIG. 9B relates to the processing with the concentric circle method. As illustrated in FIG. 10B, the concentric circle method is a processing method of scanning a laser beam along a processing line (a circular trajectory in FIG 10) without rotating the laser beam. It should be noted that the focal spot rotation method can be employed where a width indicated in FIG 10A is set to be 200 $\mu$m or greater.

In the processing examples of FIG 9, the wavelength of the laser beam is 532 nm, while the substrate is made of carbon and has a thickness of 1 mm. Further, the experimental examples (a) and (b) were conducted under the same conditions regarding the laser beam output power and the laser beam scanning time per circulation.

As is obvious from comparison between the experimental examples of FIGS. 9A and 9B, when the focal spot rotation method is employed, the substrate can be processed with a larger processing depth at a smaller number of times of scanning. In other words, when the focal spot rotation method is employed, boring can be executed in a shorter time. As a reason of the above, it can be considered that in employing the focal spot rotation method, the laser beam is repeatedly irradiated onto the same position, i.e., the outer peripheral edge part of a processing target portion, and thereby, the part is more deeply processed.

As described above, in the present exemplary embodiment, it is possible to process a substrate that has a relatively large thickness (of 1 mm or greater) and a laser beam absorption rate of 50% or greater in a shorter time.

(Other Exemplary Embodiments)

The present invention is not limited to the aforementioned exemplary embodiment, and a variety of changes or modifications can be made without departing from the scope of the present invention.

(a) The mechanism for rotating the laser beam, the structure for focusing the laser beam, and further, the structure for scanning the laser beam are not limited to those described in the aforementioned exemplary embodiment. For example, as the structure for scanning the laser beam, two galvano mirrors may be provided instead of the second hollow motor and the pair of second prisms. With the structure, the laser beam can be scanned in an arbitrary shape. Specifically, an X-directional galvano mirror, a Y-directional galvano mirror and an f$\theta$ lens are disposed. The X-directional galvano mirror is configured to scan the laser beam in the X-coordinate axis direction within a plane arranged along the substrate surface. On the other hand, the Y-directional galvano mirror is configured to scan the laser beam in the Y-coordinate axis direction within the plane arranged along the substrate surface. With the structure, the laser beam can be scanned in an arbitrary shape on the substrate surface.

(b) In the aforementioned exemplary embodiment, as a mechanism for moving a focal spot in the Z-coordinate axis direction, the Z-coordinate axis directional moving mechanism 22 is configured to move the second hollow motor 18 including the collective lens 35. However, the second hollow motor 18 including the collective lens 35 may be fixed, whereas the work table 2 may be configured to be moved in the Z-coordinate axis direction.

(c) The specific structure of the optical system is not limited to that described in the aforementioned exemplary embodiment. The optical system may be arbitrary formed as long as the laser beam outputted from the laser beam output section 15 can be effectively inputted into the first wedge prisms 321 and 322 of the first hollow motor 17 while the optical axis can be easily adjusted.

(d) The aforementioned specific example of the first edge prisms 321 and 322 is exemplary only. Therefore, the first edge prisms 321 and 322 are not limited to the specific example. Further, respective numeric values presented in the processing examples are exemplary only.

(e) Even when any suitable material other than carbon such as ceramic, silicon or so forth is employed as the material of the substrate, advantageous effects similar to those achieved by the aforementioned exemplary embodiment can be achieved by applying the present invention.

REFERENCE SIGNS LIST

| 2 | Work table |
|---|---|
| 15 | Laser beam output section |
| 16 | Optical system |
| 17 | First hollow motor |
| 18 | Second hollow motor |
| 321, 322 | First wedge prism |
| 341, 342 | Second wedge prism |
| 35 | Collective lens |
| W | Substrate |

It is intended to enable a substrate made of a thick plate material with a high laser beam absorption rate to be easily processed by means of boring or so forth in a short time. The present device includes a work table (2) on which a substrate is disposed, a laser beam output section (15), a rotation unit, a beam focusing unit and a scan unit. The laser beam output section (15) is configured to output a laser beam, having a wavelength with an absorption rate of 50% or greater, onto the substrate. The rotation unit is configured to rotate the laser beam emitted from the laser beam output section (15) with a predetermined rotation radius. The beam focusing unit is configured to focus the laser beam from the rotating unit onto a depth position included within the substrate, the depth position is located closer to one substrate surface disposed on a laser beam irradiation side than to the other substrate surface. The scan unit is configured to scan the focused and rotated laser beam along a processing line, and is also configured to repeatedly execute the scanning so as to process the substrate.

**Claims**

1. A substrate cutting device using a laser beam, the substrate cutting device being configured to irradiate the laser beam onto a substrate so as to cut the substrate, the substrate cutting device comprising:

   a work table on which the substrate to be processed is disposed;
   a laser beam output section being configured to output the laser beam onto the substrate, the laser beam having a wavelength with an absorption rate of 50% or greater;
   a rotation unit being configured to rotate the laser beam emitted from the laser beam output section with a predetermined rotation radius;
   a beam focusing unit being configured to focus the laser beam from the rotating unit onto a depth position included within the substrate, the depth position being located closer to one substrate surface disposed on a laser beam irradiation side than to the other substrate surface; and
   a scan unit being configured to scan the focused and rotated laser beam along a processing line, the scan unit being configured to repeatedly execute the scanning so as to process the substrate.

2. The substrate cutting device using a laser beam according to claim 1, wherein the substrate has a thickness of 1 mm or greater.

3. The substrate cutting device using a laser beam according to claim 1 or 2, wherein the beam focusing unit is configured to move a focal position of the laser beam from the laser beam irradiation side to an opposite side thereof within the substrate.

4. The substrate cutting device using a laser beam according to any of claims 1 to 3, wherein the substrate is made of any one selected from the group consisting of carbon, ceramic and silicon.

FIG. 1

FIG. 2

FIG. 3

EP 2 808 120 A2

# FIG. 4

# FIG. 5

δ: APEX ANGLE
n: REFRACTIVE INDEX

FIG. 6

CIRCLE WITH $\phi$ 0.4 ~ 0.8 mm
(HIGH SPEED ROTATION: ~15000 rpm)

CIRCLE WITH
$\phi$ 4.2 ~ 4.6 mm
(400~800rpm)

5.0mm

PROCESSING REGION

FIG. 7

# FIG. 8A

PORTION TO BE
PROCESSED

DIAMETER OF HOLE
TO BE PROCESSED

# FIG. 8B

FOCAL SPOT

17

# FIG. 9A

FOCAL SPOT ROTATION METHOD

SCANNING: 10 TIMES  SCANNING: 20 TIMES  SCANNING: 30 TIMES  SCANNING: 40 TIMES  SCANNING: 50 TIMES

DEPTH: 253 μm  DEPTH: 367 μm  DEPTH: 446 μm  DEPTH: 596 μm  DEPTH: 912 μm

# FIG. 9B

CONCENTRIC CIRCLE METHOD

SCANNING: 10 TIMES  SCANNING: 20 TIMES  SCANNING: 30 TIMES  SCANNING: 40 TIMES  SCANNING: 50 TIMES

DEPTH: 138 μm  DEPTH: 250 μm  DEPTH: 371 μm  DEPTH: 546 μm  DEPTH: 659 μm

LASER

LASER

WIDTH

FOCAL SPOT
ROTATION METHOD

CONCENTRIC
CIRCLE METHOD

# FIG. 10A

# FIG. 10B

**EP 2 808 120 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007118054 A